# EUROPEAN PATENT APPLICATION

(11) **EP 1 190 938 A2**
(43) Date of publication of application: **27.03.2002**
(21) Application number: 01105795.7
(22) Date of filing: 08.03.2001
(51) Int. Cl.: B62D 25/04, B62D 21/09

(54) **Center pillar for automobiles**

(30) Priority: 20.09.2000 KR 2000055077
(71) Applicant: Kia Motors Corporation, Seocho-gu, Seoul (KR)
(72) Inventor: Kwon, O-Sung, Gwangmyeong-si, Gyeonggi-do (KR)
(74) Representative: Viering, Hans-Martin, Dipl.-Ing.

(57) **Abstract**

A center pillar (100) for automobiles having a reinforcement structure, which can minimize the deformation of a center pillar against the impact occured by a crash of vehicles is disclosed. The center pillar comprises: an inner reinforcement (130) joined with an inner side of an inner panel (110) for supporting said inner panel; an outer reinforcement (140) of which an end portion is welded together with an end portion (111,112) of the inner panel (110) and an outer panel (120), and a first spacing portion (142) is formed between the outer panel (120) and the outer reinforcement (140), a central reinforcement (150) joined with the one side of the outer reinforcement (140) near to the inner reinforcement (130) and a second spacing portion (151) is formed between the outer reinforcement (140) and the central reinforcement (150).

## Description

### Technical Field

The present invention relates to a body structure for automobiles, more particularly, a center pillar for automobiles having a reinforcement structure, which can minimize the deformation of a center pillar against the impact occurred by a crash of vehicles.

### Background Art

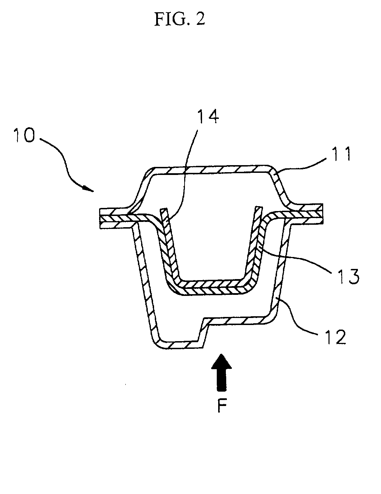

As shown in FIG. 2, a center pillar 10 of a general automobile is comprising a first reinforcement 13 welded together with the end portion of an inner panel 11 and an outer panel 12, which is for supporting the inner side of the outer panel 12, and a second reinforcement 14 welded with the first reinforcement 13.

When an impact "F" is exerted to the center pillar 10 having above structure from the outside, a deformation of the center pillar 10 occurs.

To be more specific, when an impact exerted on a side of an automobile, a tensile force acts on the inner panel 11 of the center pillar 10, whereas a compressive force acts on the outer panel 12 of the center pillar 10.

As a result, different kind of force is exerted on the inner panel 11 and the outer panel 12.

Therefore, the reinforcement merely supporting the inner panel and outer panel cannot reinforce the center pillar effectively, so that the structure of the center pillar cannot protect passengers safely.

### Disclosure of the Invention

It is an object of the present invention to provide a center pillar for automobiles, which can minimize the deformation of a center pillar against the impact occurred by a crash of vehicles, by reinforcing the center pillar effectively.

According to the aspect of the above object, there is provided a center pillar for automobiles, the center pillar comprising: an inner reinforcement joined with an inner side of an inner panel for supporting said inner panel; an outer reinforcement of which an end portion is welded together with an end portion of the inner panel and an outer panel and having a first spacing portion between the outer panel and the outer reinforcement; a central reinforcement joined with the one side of the outer reinforcement near to the inner reinforcement and having a second spacing portion between the outer reinforcement and the central reinforcement.

### Brief Description of the Drawings

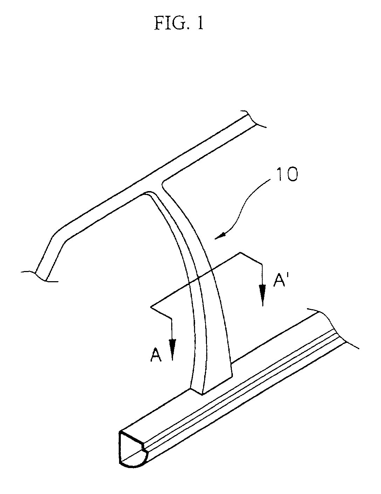

FIG. 1 is a perspective view showing a center pillar of a general automobile;
FIG. 2 is a section view showing along the cut line A - A' of FIG. 1;
FIG. 3 is a section view of a center pillar of the present invention.

### Best mode for carrying out the Invention

The embodiment of a center pillar of the present invention will be described with reference to the drawings.

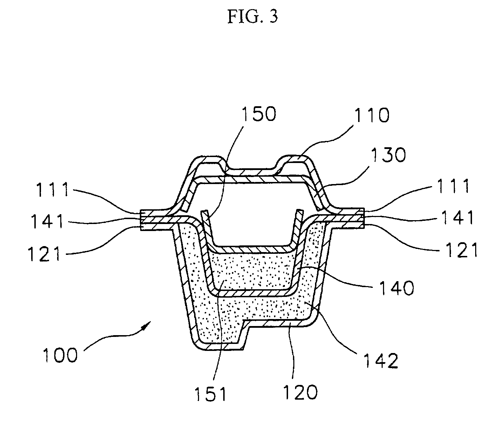

As shown in FIG. 3, an inner reinforcement 130 is joined with an inner side of an inner panel 110 for supporting said inner panel 110.

An end portion 141 of an outer reinforcement 140 is welded together with an end portion 111, 121 of the inner panel 110 and an outer panel 120, thereby a first spacing portion 142 is formed between the outer panel 120 and the outer reinforcement 140.

A central reinforcement 150 is joined with the one side of the outer reinforcement 140 near to the inner reinforcement 130, thereby a second spacing portion 151 is formed between the outer reinforcement 140 and the central reinforcement 150.

It is more preferable that the material of the inner panel 110 and the inner reinforcement 130 is TRIP (Transformation-Induced Plasticity) steel, (also can be made of other material and the like) so that it prevents a deformation of the center pillar when a crash occurs to the side of a car.

It is also preferable that a powder of a synthetic resin, which is hardened by heat, is filled in the first spacing portion 142 and the second spacing portion 151, so the powder of a synthetic resin is hardened by the heat generated during the process of drying paint after painting a car.

The present invention having above structure provides a center pillar, which can resist the tensile force acting on the inner panel and the compressive force acting on the outer panel, so that the structure prevents deformation of the center pillar.

### Industrial Applicability

As described above, a center pillar for automobiles of the present invention can minimize the deformation of a center pillar of a car against the impact occurred by a crash of vehicles.

## Claims

1. A center pillar for automobiles, comprising:
an inner reinforcement joined with an inner side of an inner panel for supporting said inner panel;
an outer reinforcement of which an end portion is welded together with an end portion of the inner panel and an outer panel, and a first spacing portion is formed between the outer panel and the outer reinforcement;
a central reinforcement joined with the one side of the outer reinforcement near to the inner reinforcement and a second spacing portion is formed between the outer reinforcement and the central reinforcement.

2. A center pillar for automobiles as claimed in claim 1, wherein the inner panel is made of TRIP steel.

3. A center pillar for automobiles as claimed in claim 1, wherein the inner reinforcement is made of TRIP steel.

4. A center pillar for automobiles as claimed in claim 1, a powder of a synthetic resin, which is hardened by heat, is filled in the first spacing portion and the second spacing portion.
